# EUROPÄISCHE PATENTSCHRIFT

(11) **EP 1 642 031 B1**
(45) Veröffentlichungstag und Bekanntmachung des Hinweises auf die Patenterteilung: **24.01.2007**
(21) Anmeldenummer: 04738773.3
(22) Anmeldetag: 24.06.2004
(51) Int. Cl.: F04C 15/00, F16J 15/32

(54) **PUMPE**
PUMP
POMPE

(30) Priorität: 30.06.2003 DE 10329286
(43) Veröffentlichungstag der Anmeldung: 05.04.2006
(73) Patentinhaber: LuK Fahrzeug-Hydraulik GmbH & Co. KG, 61352 Bad Homburg (DE)
(72) Erfinder: ROSENKRANZ, Kerstin, 61440 Oberursel (DE)
(74) Vertreter: Duschl, Edgar Johannes
(86) Internationale Anmeldenummer: PCT/DE2004/001324
(87) Internationale Veröffentlichungsnummer: WO 2005/001290

(56) Entgegenhaltungen:
- DE-B- 1 253 584
- GB-A- 1 051 064
- US-A- 4 050 855
- US-A- 6 164 928

## Beschreibung

Die Erfindung betrifft eine Pumpe, insbesondere Flügelzellenpumpe für Getriebeölversorgung, mit einem Pumpengehäuse und einer Rotationsgruppe, welche im Pumpengehäuse angeordnet ist, wobei die Rotationsgruppe unter anderem eine Seitenplatte aufweist, welche derart im Pumpengehäuse angeordnet sein kann, dass zumindest zeitweilig sich ein axialer Spalt zwischen der Seitenplatte und dem Pumpengehäuse ergibt, und dass im Pumpengehäuse eine Welle gelagert ist und in einer Ausnehmung um die Welle ein Radialwellendichtring angeordnet ist. Der axiale Spalt stellt einen Kurzschluss zwischen einem Ansaugdruckbereich, der durch die Saugnieren in der Seitenplatte und einen entsprechenden Bereich im Pumpengehäuse dargestellt ist, und einem Lecköldruckbereich, der sich unter anderem um die Welle im Bereich des Rotors erstreckt, her.

Eine ähnliche Pumpe, als Zahnradpumpe ausgeführt, ist aus DE 1 253 584 B bekannt.

Es ist daher Aufgabe der Erfindung, eine Pumpe darzustellen, die diese Nachteile nicht aufweist.

Die Aufgabe wird gelöst durch eine Pumpe, insbesondere Flügelzellenpumpe für Getriebeölversorgung, mit einem Pumpengehäuse und einer Rotationsgruppe, welche im Pumpengehäuse angeordnet ist, wobei die Rotationsgruppe unter anderem eine Seitenplatte aufweist, welche derart im Pumpengehäuse angeordnet sein kann, dass zumindest zeitweilig sich ein axialer Spalt zwischen Seitenplatte und Pumpengehäuse ergibt, und dass im Pumpengehäuse eine Welle gelagert ist und in einer Ausnehmung um die Welle ein Radialwellendichtring angeordnet ist, welcher die Rotationsgruppe zur Umgebung hin radial am Pumpengehäuse und durch eine erste Dichtlippe radial an der Welle abdichtet, wobei der Radialwellendichtring zusätzlich zur radialen Abdichtung zwischen Welle (erste radiale Dichtlippe) und Pumpengehäuse eine axiale Abdichtung zwischen Pumpengehäuse und Seitenplatte herstellt. Bevorzugt wird eine Pumpe, bei welcher die axiale Abdichtung den axialen Spalt überbrückt.

Auch wird eine Pumpe bevorzugt, bei welcher die axiale Abdichtung durch eine zweite, axial wirksame Dichtlippe dargestellt ist. Weiterhin wird eine Pumpe bevorzugt, bei welcher die zweite Dichtlippe an dem radial außen liegenden Dichtungsboden (Abdichtung zum Gehäuse) des Radialwellendichtringes angeordnet ist.

Eine erfindungsgemäße Pumpe zeichnet sich dadurch aus, dass der Radialwellendichtring so angeordnet ist, dass seine radial außenliegenden Dichtungsabschnitte von dem Inneren der Pumpe weggerichtet sind.

Weiterhin wird eine Pumpe bevorzugt, bei welcher die Seitenplatte über ein Distanzmittel axial gegenüber dem Pumpengehäuse gelagert ist. Auch wird eine Pumpe bevorzugt, bei welcher die zweite, axiale Dichtlippe nicht die Welle berührt. Das bedeutet, dass diese Dichtlippe nicht der Wellenabdichtung dient, sondem der Überbrückung des Spaltes zwischen Gehäuse und Seitenplatte.

Eine weitere erfindungsgemäße Pumpe zeichnet sich dadurch aus, dass die Seitenplatte eine Dichteinrichtung aufweist, welche fedemd gegen das Pumpengehäuse drückt und somit im Stillstand, also im drucklosen Zustand der Pumpe den axialen Spalt (durch Federkraft) vergrößert. Bevorzugt wird auch eine Pumpe, bei welcher die axiale Abdichtung einen sich durch Bauteiltoleranzen verändernden Spalt überbrückt. Auch wird eine Pumpe bevorzugt, bei welcher die axiale Abdichtung einen Lecköldruckbereich gegen einen Saugöldruckbereich der Pumpe abdichtet. Das hat den Vorteil, dass ein Kurzschluss zwischen dem Lecköldruckbereich und dem Saugöldruckbereich beim Anlaufen/Starten der Pumpe verhindert wird und damit Ansaugverzögerungen verhindert werden, insbesondere bei tiefen Temperaturen.

Die Erfindung wird nun anhand der Figuren beschrieben:
- Figur 1: zeigt eine erfindungsgemäße Pumpe im Stillstand.
- Figur 2: zeigt eine erfindungsgemäße Pumpe im Betrieb.

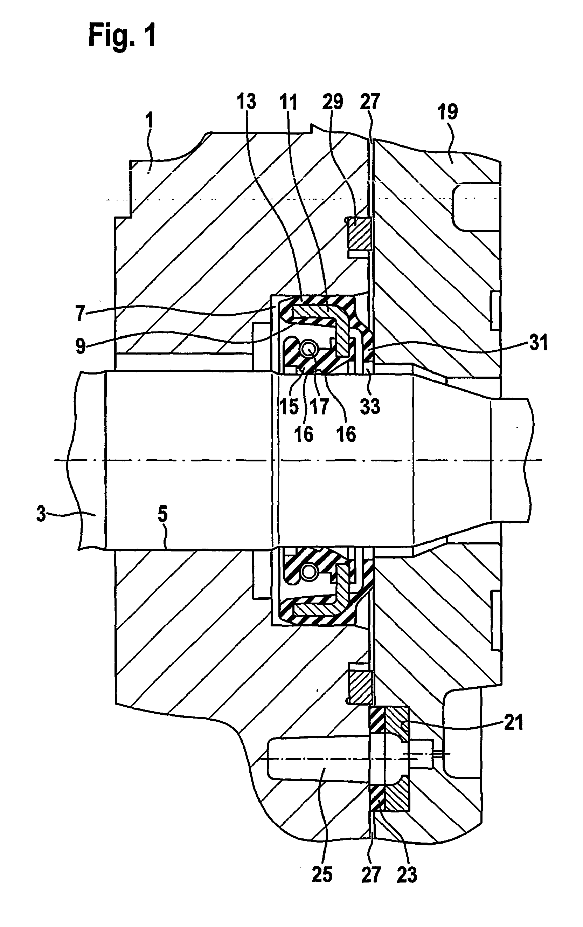

In Figur 1 ist ein Ausschnitt der erfindungsgemäßen Pumpe im Querschnitt dargestellt. Die Pumpe befindet sich in dieser Darstellung im Stillstand. In einem Pumpengehäuse 1 ist eine Welle 3 in einem Gleitlager 5 gelagert. Das Pumpengehäuse 1 weist ferner eine Ausnehmung 7 auf, in welcher ein Radialwellendichtring 9 gelagert ist. Der Radialwellendichtring 9 besitzt einen im Querschnitt L-förmigen Stützkörper 11, der beispielsweise aus einem metallischen Werkstoff hergestellt sein kann. Ein Schenkel des Stützkörpers 11 ist von einer elastischen Dichtungsschicht 13 umgeben, welche gegen das Pumpengehäuse 1 abdichtet. Gegen die Oberfläche der Welle 3 dichtet ein Dichtungsbereich 15 ab, welcher eine erste oder in diesem Fall mehrere Dichtlippen (16) aufweisen kann, welche auf der rotierenden Welle 3 gleiten. Die Dichtlippen des Dichtungsbereiches 15 werden durch die Federkraft eines Federkörpers 17 zusätzlich gegen die Oberfläche der Welle 3 gepresst. Der Dichtungsbereich 15 ist an dem anderen Schenkel des im Querschnitt L-förmigen Stützkörpers 11 angeordnet.

Die Pumpe weist ferner eine Seitenplatte 19 auf, welche die hier nicht weiter dargestellte Rotationsgruppe, bestehend aus einem Rotor mit radialen Schlitzen, in welchem radial verschiebliche Flügel beweglich angeordnet sind, einem Hubkonturring und einer hinteren Druckplatte oder einer hinteren Abdeckung durch das Gehäuse, axial nach vorne abschließt. Die Seitenplatte 19 enthält in einer Ausnehmung 21 eine so genannte Kombidichtung 23, welche sich über einen gewissen, nicht umtaufenden Bereich der Seitenplatte erstreckt und somit den Bereich eines so genannten Zwischenvolumens 25 (siehe DE 100 27 990 A1) im Gehäuse 1 radial und axial abdichtet. Im Stillstand der Pumpe erzeugt die elastische Federkraft dieser Dichtung 23 eine entsprechende Federkraftwirkung und drückt somit die Seitenplatte 19 vom Gehäuse 1 weg, so dass ein axialer Spalt 27 entsteht. Der axiale Spalt 27 ist dabei im Stillstand der Pumpe so groß, dass er sich sogar an einem Distanzmittel 29, einem so genannten Wippring, vorbei bildet.

Die Einbaulage des Radialwellendichtrings 9 unterscheidet sich von den normalen Anwendungen bei Wellendichtringen dadurch, dass der Dichtring um 180° verdreht gegenüber den normalen Wellendichtringen eingebaut ist, so dass seine beiden dichtenden Schenkel 13 und 15 vom Inneren der Pumpe weggerichtet sind. Erfindungsgemäß weist der Radialwellendichtring 9 eine zusätzliche, zweite Dichtlippe 31 auf, welche an dem Dichtungsteil 13 angespritzt ist und somit den axialen Spalt 27 zwischen dem Pumpengehäuse 1 und der Seitenplatte 19 überbrückt und damit abdichtet. Die Abdichtung durch die zweite Dichtlippe 31 ist erforderlich, weil in dem Bereich 33 ein gewisser Leckageöldruck herrscht, welcher durch das an den Leckagespalten zwischen Rotor und Seitenplatte vorbeilaufende Drucköl aus den Druckkammem der Flügelzellenpumpe erzeugt wird. In dem Spalt 27 dagegen herrscht der Ansaugdruck der Pumpe, welcher niedriger als der Leckageöldruck im Bereich 33 ist. Während des Pumpenstarts ist also dieser je nach Toleranzlage der Bauteile unterschiedlich große Spalt 27 zwischen der Seitenplatte 19 und dem Pumpengehäuse 1 vorhanden. Dieser Spalt 27 würde also eine Verbindung zwischen dem hier nicht dargestellten Pumpensaugraum, der durch die Saugnieren in der Seitenplatte und einen entsprechenden Bereich im Pumpengehäuse dargestellt ist, und dem Lecköldruckbereich 33, der sich unter anderem um die Welle im Bereich des Rotors über die Wellenmitte zum Rotationsgruppen-Innenraum hin erstreckt, herstellen. In diesem Bereich wäre also ein Kurzschluss zwischen diesen Druckbereichen vorhanden, der beispielsweise zu Ansaugverzögerungen speziell bei tiefen Temperaturen führen könnte. Mit der axialen Dichtlippe 31 des Radialwellendichtringes 9 ist diese Verbindung unterbrochen, und ein Ansaugproblem kann an dieser Stelle nicht mehr auftreten. Aufgrund der Toleranzkette ergeben sich für verschiedene Pumpen unterschiedlich große Auslenkungen der Axialdichtlippe. Die Auslegung der Axialdichtlippe ist so gewählt, dass in allen Toleranzlagen die Dichtfunktion gewährleistet wird bzw. der Spalt sicher überbrückt und abgedichtet werden kann.

Die Funktion des Zusatzvolumens 25 ist in der Druckschrift DE10027990A1 beschrieben.

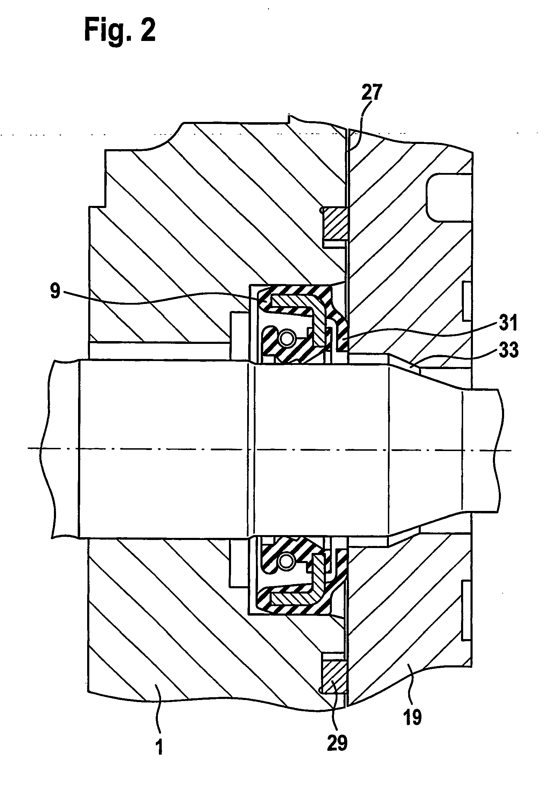

In Figur 2 ist im Querschnitt der Zustand der Pumpe im Betrieb dargestellt. Im Pumpenbetrieb wird der Dichtspalt 27 dadurch verringert, dass der Druck hinter der Rotationsgruppe die Rotationsgruppe und damit die Seitenplatte 19 gegen das Distanzmittel 29 im Pumpengehäuse 1 presst. Damit gelangt der über den Umfang sich erstreckende geschlossene Distanzring 29 zur Abdichtung zwischen dem Leckölbereich 33 und dem Saugöldruckbereich. Durch den Druck wird die Kombidichtung 23 entsprechend zusammengepresst und kann die Erweiterung des Spaltes 27 nicht aufrechterhalten. Je nach Größe des auf die Rotationsgruppe und die Seitenplatte 19 wirkenden Druckes kann sich die Seitenplatte 19 über dem so genannten Wippring 29 durchbiegen und die Spaltweite des Spaltes 27 damit variieren. Diese Variation des Spaltes 27 muss die elastische zweite Dichtlippe 31 des Radialwellendichtrings 9 mitmachen, ohne durch Leckagedruck im Bereich 33 radial weggedrückt oder umgeklappt zu werden. Die axiale Dichtlippe (31) darf sich also aufgrund des anstehenden Differenzdruckes nicht nach außen umstülpen.

Ein weiterer Lösungsansatz wäre ein Radialwellendichtring und ein zusätzlicher O-Ring, der axial dichtet. Hier ist aber der Radialwellendichtring mit axialer Dichtlippe von Vorteil, da nur ein einziges Bauteil verbaut wird, welches aber zwei Funktionen beinhaltet: radiale und axiale Abdichtung mit getrennten Dichtlippen. Andere Ausführungen/Varianten einer axialen Dichtlippe sind im Rahmen der Erfindung denkbar.

## Patentansprüche

1. Pumpe, insbesondere Flügelzellenpumpe für Getriebeölversorgung, mit einem Pumpengehäuse (1) und einer Rotationsgruppe, welche im Pumpengehäuse (1) angeordnet ist, wobei die Rotationsgruppe unter anderem eine Seitenplatte (19) aufweist, welche derart im Pumpengehäuse (1) angeordnet sein kann, dass zumindest zeitweilig sich ein axialer Spalt (27) zwischen der Seitenplatte (19) und dem Pumpengehäuse (1) ergibt, und dass im Pumpengehäuse (1) eine Welle (3) gelagert ist und in einer Ausnehmung (7) um die Welle (3) ein Radialwellendichtring (9) angeordnet ist, welcher die Rotationsgruppe zur Umgebung hin radial am Pumpengehäuse (1) und durch eine erste Dichtlippe (16) radial an der Welle (3) abdichtet, **dadurch gekennzeichnet, dass** der Radialwellendichtring (9) zusätzlich zur radialen Abdichtung zwischen Welle und Pumpengehäuse (1) eine axiale Abdichtung zwischen Pumpengehäuse (1) und Seitenplatte (19) herstellt.

2. Pumpe nach Anspruch 1, **dadurch gekennzeichnet, dass** die axiale Abdichtung den axialen Spalt (27) überbrückt.

3. Pumpe nach Anspruch 1 oder Anspruch 2, **dadurch gekennzeichnet, dass** die axiale Abdichtung durch eine zweite Dichtlippe (31) dargestellt ist.

4. Pumpe nach Anspruch 3, **dadurch gekennzeichnet, dass** die zweite Dichtlippe (31) an dem radial außen liegenden Dichtungsboden (13) des Radialwellendichtringes (9) angeordnet ist.

5. Pumpe nach einem der vorhergehenden Ansprüche, **dadurch gekennzeichnet, dass** der Radialwellendichtring (9) so angeordnet ist, dass seine radiale außenliegenden Dichtungsabschnitte (13) von dem Inneren der Pumpe weggerichtet sind.

6. Pumpe nach einem der vorhergehenden Ansprüche, **dadurch gekennzeichnet, dass** die Seitenplatte (19) über ein Distanzmittel (29) axial gegenüber dem Pumpengehäuse (1) gelagert ist.

7. Pumpe nach einem der vorhergehenden Ansprüche, **dadurch gekennzeichnet, dass** die axiale Dichtlippe (31) nicht die Welle (3) berührt.

8. Pumpe nach einem der vorhergehenden Ansprüche, **dadurch gekennzeichnet, dass** die Seitenplatte (19) eine Dichteinrichtung (23) aufweist, welche fedemd gegen das Pumpengehäuse (1) drückt und somit im Stillstand, also im drucklosen Zustand der Pumpe den axialen Spalt (27) durch Federkraft vergrößert.

9. Pumpe nach einem der vorhergehenden Ansprüche, **dadurch gekennzeichnet, dass** die axiale Abdichtung einen durch Bauteiltoleranzen veränderlichen Spalt (27) überbrückt.

10. Pumpe nach einem der vorhergehenden Ansprüche, **dadurch gekennzeichnet, dass** die axiale Abdichtung einen Lecköldruckbereich gegen einen Saugöldruckbereich der Pumpe abdichtet.

## Claims

1. A pump, in particular a vane pump for supplying transmission oil, having a pump housing (1) and a rotation module which is situated in the pump housing (1), where the rotation module has among other things a side plate (19) which may be situated in the pump housing (1) in such a way that at least part of the time an axial gap (27) results between side plate (19) and pump housing (1), and a shaft (3) is supported in pump housing (1), and in a recess (7) around shaft (3) a radial shaft sealing ring (9) is situated, which seals the rotation module from the surroundings radially on pump housing (1), and through a first sealing lip (16) radially on shaft (3), **characterized in that** radial shaft sealing ring (9), in addition to producing the radial seal between the shaft and pump housing (1), produces an axial seal between pump housing (1) and side plate (19).

2. The pump according to Claim 1, **characterized in that** the axial seal spans axial gap (27).

3. The pump according to Claim 1 or 2, **characterized in that** the axial seal is constituted by a second sealing lip (31).

4. The pump according to Claim 3, **characterized in that** the second sealing lip (31) is situated on the radially outer sealing base (13) of radial shaft sealing ring (9).

5. The pump according to one of the preceding claims, **characterized in that** radial shaft sealing ring (9) is situated in such a way that its radially outer sealing sections (13) are directed away from the interior of the pump.

6. The pump according to one of the preceding claims, **characterized in that** side plate (19) is supported axially with respect to pump housing (1) through a spacer (29).

7. The pump according to one of the preceding claims, **characterized in that** axial sealing lip (31) does not touch shaft (3).

8. The pump according to one of the preceding claims, **characterized in that** side plate (19) has a sealing device (23) which presses against pump housing (1) with spring pressure, and thus enlarges axial gap (27) by spring force when the pump is standing still, i.e. when it is producing no pressure.

9. The pump according to one of the preceding claims, **characterized in that** the axial seal spans an axial gap (27) which is variable due to tolerances of the parts.

10. The pump according to one of the preceding claims, **characterized in that** the axial seal seals off an overflow oil pressure zone from a suction oil pressure zone of the pump.

## Revendications

1. Pompe, en particulier pompe à palettes pour l'alimentation d'huile d'une boîte de vitesses, comprenant un carter de pompe (1) et un groupe de rotation qui est disposé dans le carter de pompe (1), où le groupe de rotation présente, entre autres éléments, une plaque latérale (19) qui peut être disposée dans le carter de pompe (1), de manière telle qu'il en résulte, au moins temporairement, un intervalle axial (27) formé entre la plaque latérale (19) et le carter de pompe (1), qu'un arbre (3) soit monté dans le carter de pompe (1) et qu'un joint radial pour arbre tournant (9) soit disposé dans un creux (7), autour de l'arbre (3), joint radial pour arbre tournant qui assure l'étanchéité du groupe de rotation, tout autour dans le sens radial, sur le carter de pompe (1), et par une première lèvre d'étanchéité (16) placée sur l'arbre (3) dans le sens radial, **caractérisée en que** le joint radial pour arbre tournant (9), en plus de l'étanchéité radiale entre l'arbre et le carter de pompe (1), assure une étanchéité axiale entre le carter de pompe (1) et la plaque latérale (19).

2. Pompe selon la revendication 1, **caractérisée en ce que** l'étanchéité axiale comble l'intervalle axial (27).

3. Pompe selon la revendication 1 ou la revendication 2, **caractérisée en ce que** l'étanchéité axiale est représentée par une deuxième lèvre d'étanchéité (31).

4. Pompe selon la revendication 3, **caractérisée en ce que** la deuxième lèvre d'étanchéité (31) est disposée sur un fond d'étanchéité (13) du joint radial pour arbre tournant (9), ledit fond d'étanchéité se trouvant à l'extérieur dans le sens radial.

5. Pompe selon l'une quelconque des revendications précédentes, **caractérisée en ce que** le joint radial pour arbre tournant (9) est disposé de manière telle, que ses parties d'étanchéité (13) se trouvant à l'extérieur dans le sens radial soient éloignées de l'intérieur de la pompe.

6. Pompe selon l'une quelconque des revendications précédentes, **caractérisée en ce que** la plaque latérale (19) est montée, via un moyen (29) formant entretoise, en faisant face axialement au carter de pompe (1).

7. Pompe selon l'une quelconque des revendications précédentes, **caractérisée en ce que** la lèvre d'étanchéité axiale (31) ne vient pas au contact de l'arbre (3).

8. Pompe selon l'une quelconque des revendications précédentes, **caractérisée en ce que** la plaque latérale (19) présente un dispositif d'étanchéité (23) qui, en faisant ressort, s'applique contre le carter de pompe (1) et, par conséquent, à l'arrêt, donc lorsque la pompe est sans pression, augmente l'intervalle axial (27) sous l'effet de la force du ressort.

9. Pompe selon l'une quelconque des revendications précédentes, **caractérisée en ce que** l'étanchéité axiale comble un intervalle (27) variable en fonction des tolérances de la pièce de structure.

10. Pompe selon l'une quelconque des revendications précédentes, **caractérisée en ce que** l'étanchéité axiale assure l'étanchéité d'une zone de pression d'huile de fuite, par rapport à une zone de pression d'huile d'aspiration de la pompe.
